Europäisches Patentamt

(19) European Patent Office                    (11) Numéro de publication: **0 209 455**
                                                                      **B1**
Office européen des brevets

(12)                         **FASCICULE DE BREVET EUROPEEN**

(45) Date de publication du fascicule du brevet:     (51) Int. Cl.⁴: **B62B 1/14,** B62B 1/00,
**20.12.89**                                                **B62B 3/10**

(21) Numéro de dépôt: **86401536.7**

(22) Date de dépôt: **10.07.86**

(54) **Dispositif à fixer solidairement à un conteneur pour en faciliter le déplacement.**

(30) Priorité: **17.07.85  FR 8510925**                 (73) Titulaire: **Djouad, Mohamed, 36, rue Coquille,
                                                        F-45000 Orleans(FR)**

(43) Date de publication de la demande:
**21.01.87 Bulletin 87/4**                           (72) Inventeur: **Djouad, Mohamed, 36, rue Coquille,
                                                        F-45000 Orleans(FR)**

(45) Mention de la délivrance du brevet:
**20.12.89 Bulletin 89/51**

(84) Etats contractants désignés:
**AT BE CH DE FR GB IT LI LU NL SE**

(56) Documents cités:
**US-A- 2 818 271**
**US-A- 3 356 383**
**US-A- 3 802 717**
**US-A- 3 830 514**

## Description

La présente invention concerne un dispositif permettant d'améliorer sensiblement la manutention des récipients de toutes sortes. Elle concerne plus particulièrement la manutention et la maniabilité des récipients ronds en fer, plastique, de collecte hermétique des ordures ménagères, mais non exclusivement (parce que ce sont ceux-ci qui semblent présenter le plus d'intérêt) tout autre récipient posant des problèmes de prise et manutention à leurs utilisateurs pouvant être équipé de ce dispositif.

EXEMPLE : fûts de toutes sortes, conteneurs, poubelles, emballages ... Ces récipients pouvant être en différents matériaux tels que : FER, PLASTIQUE, ALLIAGES, FIBRES, CARTON et de toutes formes et sections : cylindriques, rectangulaires ou autres ...

Ce dispositif s'adapte sous le fond desdits conteneurs, soit à l'intérieur lorsque des rebords existent, soit à l'extérieur dans le cas contraire.

On connaît les "diables" entre autre pour la manutention de conteneurs divers, comportant un châssis, des roues et des moyens pour soutenir et accrocher le conteneur : ce dispositif est lourd et peu pratique. Egalement :

US-A-2.818.271 propose, pour les conteneurs de petit diamètre, un adaptateur 42 formé d'un anneau guidé grâce à des encoches 44 le long des barres 46 du châssis. Il faut donc autant d'adptateurs que de tailles de fonds de conteneurs, à part le plus grand. Cette situation oblige à stocker l'appareil correspondant à la taille la plus grande.

US-A-3.356.383 (correspondant au préambule de la revendication 1) prévoit également un châssis dont la taille correspond à celle du conteneur le plus grand, et l'adaptation se fait en déplaçant des butoirs 24 de façon coulissante le long de la fourrure 14 de l'axe des roues vers la partie médiane. Cette solution présente l'inconvénient signalé ci-dessus, elle est cependant moins chère, mais le maintien du conteneur, en trois points seulement, risque d'être insuffisant.

US-A-3.802.717 montre lui aussi un châssis dont la taille correspond à celle du conteneur le plus grand, constitué d'un croisillon dont chacun des bras supporte de façon coulissante des guides de maintien d'un collier. Le maintien du conteneur est réalisé par le serrage du collier de serrage 14 analogue à ceux qu'on voit sur les tuyaux souples, qui amène ces guides de maintien en appui sur le conteneur. Etant donné la taille des conteneurs, il est permis de mettre ici en doute l'efficacité du maintien et la facilité de la fixation obligeant simultanément à faire coulisser les quatre guides, ce qui peut poser des problèmes de centrage du conteneur dans le cas où le coulissement des éléments n'est pas régulier.

Le but de l'invention est de fournir un dispositif de même genre, plus simple et moins coûteux, notamment en ce qui concerne le stockage.

Dans ce but, l'invention fournit un dispositif adaptable à des conteneurs de tailles diverses, afin de faciliter le déplacement du conteneur sur lequel il est monté, ce dispositif comportant un châssis capable de supporter le fond du conteneur et équipé de deux roues montées sur un axe et d'un pied, le tout disposé en triangle, et des moyens réglables de maintien du conteneur sur le châssis, ledit châssis comportant un cadre de forme générale adaptée à la forme du fond du conteneur et destiné à être disposé soit extérieurement audit fond, soit intérieurement quand ce dernier comporte un rebord en saillie vers le bas, caractérisé en ce que le châssis est en deux parties, la première partie étant constituée par une première portion de cadre sur laquelle est fixée une fourrure maintenant l'axe, la deuxième partie étant constituée par une deuxième portion de cadre sur laquelle sont fixés le pied ainsi qu'une traverse s'étendant perpendiculairement à la fourrure et terminée par une fourche dans laquelle on peut engager plus ou moins la fourrure en fonction de la taille du conteneur.

DE PREFERENCE: les deux portions de cadre se recouvrent sur une partie variable de leur longueur en fonction de la taille du conteneur. Les deux portions de cadre sont prévues pour être fixées sur la face intérieure du rebord du fond du conteneur par des rivets ou par boulonnage, vissage, soudage, clipsage ou collage. Suivant une autre façon de faire, les deux portions de cadre sont prévues pour être montées sur un conteneur en matière plastique en étant intégrées à celui-ci de façon définitive lors du moulage du conteneur. Le châssis est associé à une poignée non solidaire dudit châssis et conçue pour être montée sur la partie supérieure du conteneur.

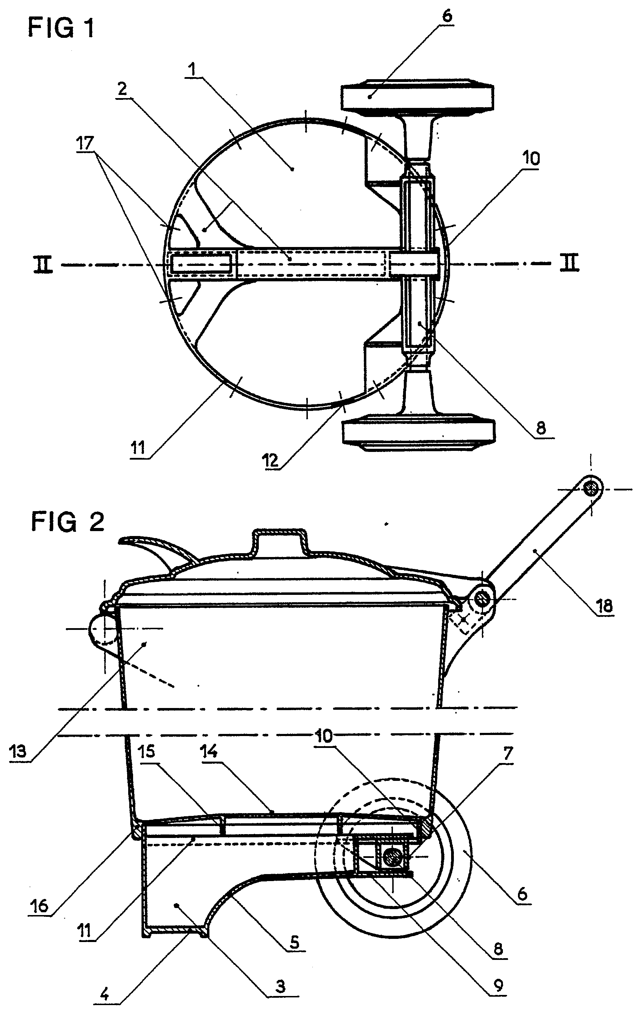

La FIGURE 1 représente un exemple de dispositif selon l'invention en vue de dessous.

La FIGURE 2 est une coupe selon II II de la figure 1.

Le dispositif représenté aux figures à titre d'exemple comprend: – un châssis (1) qui est formé d'une traverse (2) qui porte un pied (3) lequel comprend une semelle (4) et une pièce de raccordement incurvée (5) qui est solidaire de la traverse et des renforts (2) qui vont vers l'extrémité opposée de la traverse, le châssis porte deux roues (6) par l'intermédiaire d'une fourrure (7) qui loge et supporte l'axe (8), la liaison de la traverse y compris le pied avec la fourrure est en forme de fourche (9) à son extrémité pour permettre le réglage en longueur du châssis pour s'adapter aux écarts de fabrication des conteneurs. Les dents de la fourche (9) peuvent s'engager dans des logements ou guides portés par la fourrure (7) pour une plus grande rigidité du dispositif. La fourrure est solidaire d'une portion de cadre de fixation (10) qui peut être en demi-cercle ou en demi-carré. La traverse (2) est solidaire d'une autre portion de cadre de fixation (11). Les deux portions de cadre se rejoignent avec un recouvrement (12). Le conteneur (13) comprend un fond (14) renforcé par des nervures (15) qui sont soutenues par la traverse et un rebord en saillie (16) ce rebord est à l'extrémité des portions de cadre (10/11) et il est fixé sur les demi-anneaux par des rivets symbolisés en (17). On peut aussi utiliser un boulonnage, un vissage, un soudage, un clipsage ou un collage. Le fait que les demi-anneaux sont à l'intérieur du rebord du conteneur, fait qu'ils sont pratiquement invisibles, ce qui améliore l'effet esthétique. En partie haute du conteneur, une poignée (18) est montée de préférence au niveau des consoles et de la charnière du couvercle.

Cette poignée est inutile si le conteneur est de hauteur suffisante pour une prise et manipulation faciles.

On notera que sur les figures les portions de cadre font en réalité, l'un plus que la moitié d'un cercle et l'autre, moins.

L'utilisation se fait par inclinaison du récipient, du côté des roues dont est équipé le dispositif, et traction de l'ensemble en s'aidant éventuellement de la poignée adaptable en partie haute, suivant la conception et la hauteur du récipient.

Ce dispositif est plus particulièrement adapté et conçu pour les poubelles en plastique répondant aux normes DIN et AFNOR (110, 90, 70, 50 et 35 litres). Il est réalisé dans ce cas en POLYETHYLENE haute densité thermo-injectable.

Il est également adaptable sur les premières générations de poubelles qui sont en FER.

Ce dispositif, outre l'amélioration notable des manutentions, ne pénalise pas pour autant le poids de l'ensemble de par les matériaux constituants utilisés et permet également l'obtention d'un système fiable et sans entretien, parfaitement intégré à l'esthétique de l'ensemble nouvellement constitué.

## Revendications

1. Dispositif adaptable à des conteneurs de tailles diverses afin de faciliter le déplacement du conteneur sur lequel il est monté, ce dispositif comportant un châssis (1) capable de supporter le fond du conteneur et équipé de deux roues (6) montées sur un axe (8) et d'un pied (3), le tout disposé en triangle, et des moyens réglables de maintien du conteneur sur le châssis (1), ledit châssis comportant un cadre (10, 11) de forme générale adaptée à la forme du fond du conteneur et destiné à être disposé soit extérieurement audit fond, soit intérieurement quand ce dernier comporte un rebord (16) en saillie vers le bas, caractérisé en ce que le châssis (1) est en deux parties, la première partie étant constituée par une première portion de cadre (10) sur laquelle est fixée une fourrure (7) maintenant l'axe (8), la deuxième partie étant constituée par une deuxième portion de cadre (11) sur laquelle sont fixés le pied (3) ainsi qu'une traverse (2) s'étendant perpendiculairement à la fourrure (7) et terminée par une fourche (9) dans laquelle on peut engager plus ou moins la fourrure (7) en fonction de la taille du conteneur.

2. Dispositif selon la revendication 1, caractérisé en ce que les deux portions de cadre (10, 11) se recouvrent sur une partie (12) variable de leur longueur en fonction de la taille du conteneur.

3. Dispositif selon la revendication 1 ou 2, caractérisé en ce que les deux portions de cadre (10, 11) sont prévues pour être fixées sur la face intérieure du rebord (16) du fond du conteneur par des rivets (17) ou par boulonnage, vissage, soudage, clipsage ou collage.

4. Dispositif selon la revendication 1 ou 2, caractérisé en ce que les deux portions de cadre sont prévues pour être montées sur un conteneur en matière plastique, en étant intégrées à celui-ci de façon définitive lors du moulage dudit conteneur.

5. Dispositif selon l'une des revendications 1 à 4, caractérisé en ce que le châssis est associé à une poignée (18) non solidaire dudit châssis et conçue pour être montée sur la partie supérieure du conteneur.

## Claims

1. Device adaptable to different container sizes in order to facilitate the displacement of the container on which it is mounted. The device includes a chassis (1) capable of supporting the base of the container. It is equipped with two wheels (6) mounted on a axle, and a foot (3), which are formed in a triangular shape. There is an adjustable system designed to support the container on the chassis (1). The chassis includes a basic frame (10, 11) adaptable to the base of the container and designed to be placed either on the outside of the base or on the inside when there is an edge (16) portruding underneath. The chassis (1) is composed of two parts. One side is composed of part of the frame (10) to which is attached a lining (7) supporting the axle (8). The second side is composed of another part of the frame (11) to which are attached a foot (3) and a cross-piece (2) extending perpendicularly to the lining (7) and terminating in a fork (9) in which the lining (7) can be fitted according to the size of the container.

2. Device according to claim 1, characterized by the fact that the two parts of the frame overlap over a variable portion of their length according to the size of the container.

3. Device according to claim 1 or 2, characterized by the fact that the two parts of the frame are intended to be attached on the inside edge of the base by rivets (17) or by bolting, screwing, soldering, clipping or gluing.

4. Device according to claim 1 or 2, characterized by the fact that the two parts of the frame are designed to be permanently attached to a plastic container during the molding process.

5. Device according to claims 1–4, characterized by the fact that the chassis is connected to a handle which is not integrally attached and is designed to be mounted on the upper part of the container.

## Patentansprüche

1. An Behälter jeder Sorte anpaßbare Einrichtung, die die Bewegung des Behälters, woran sie angebracht ist, erleichtert, diese Einrichtung besteht aus einem Gestell (1), das den Boden des Behälters halten kann und mit zwei auf einer Achse (8) befestigten Rädern (6) sowie einer Stütze (3) versehen ist, das Ganze ist dabei dreieckig angeordnet; sie besitzt auch verstellbare Stützmöglichkeiten, um den Behälter auf dem Gestell (1) festzuhalten, das genannte Gestell hat einen Rahmen (10, 11), dessen allgemeine Form der Form des Behälterbodens angepaßt ist, und der auf den Boden befestigt werden muß, entweder von außen oder von innen her, wenn letzterer einen nach unten ragenden Rand (16) besitzt. Sie wird dadurch charakterisiert, daß das Gestell (1) aus zwei Teilen besteht: Der eine besteht aus einem ersten Teil des Rahmens (10), an dem eine Hülle (7) angebracht ist, die die Achse (8) hält, der zweite aus einem zweiten Teil des Rahmens (11), auf dem die Stütze (3) sowie die Querstange (2), die zur Hülle (7) rechtwinklig liegt und die mit einer Gabel (9) endet, in die die Hülle (7) mehr oder weniger eingeschoben werden kann, je nach der Größe des Behälters.

2. Einrichtung gemäß Anspruch 1, dadurch charakterisiert, daß die beiden Teile des Rahmens (10, 11) sich auf einer veränderlichen Länge (12) überschneiden, je nach der Größe des Behälters.

3. Einrichtung gemäß Anspruch 1 oder 2, dadurch charakterisiert, daß die beiden Rahmenteile (10, 11) dazu vorgesehen sind, auf der inneren Seite des Randes (16) des Behälterbodens durch Nieten (17) befestigt zu werden, oder durch Verbolzen, Schrauben, Schweißen, Verklammern oder Kleben.

4. Einrichtung gemäß Anspruch 1 oder 2, dadurch charakterisiert, daß die beiden Rahmenteile dazu vorgesehen sind, auf einen Plastikbehälter montiert zu werden, indem sie diesem beim Gießen endgültig integriert werden.

5. Einrichtung gemäß der Ansprüche 1 bis 4, dadurch charakterisiert, daß das Gestell mit einem Griff (18) verbunden ist, der besagtem Gestell nicht solidarisch ist und der dazu vorgesehen ist, an dem oberen Teil des Behälters befestigt zu werden.

EP 0 209 455 B1

FIG 1

FIG 2